# EUROPÄISCHE PATENTSCHRIFT

(11) **EP 1 966 040 B1**
(45) Veröffentlichungstag und Bekanntmachung des Hinweises auf die Patenterteilung: **27.05.2009**
(21) Anmeldenummer: 06819392.9
(22) Anmeldetag: 10.11.2006
(51) Int. Cl.: B63H 21/20, B63J 3/00, H02J 3/06

(54) **VERFAHREN ZUM BETRIEB EINES ENERGIESYSTEMS EINES SCHIFFES SOWIE DAFÜR GEEIGNETES ENERGIESYSTEM**
METHOD FOR OPERATING AN ENERGY SYSTEM OF A SHIP AND ENERGY SYSTEM SUITABLE THEREFORE
PROCEDE POUR FAIRE FONCTIONNER UN SYSTEME ENERGETIQUE D'UN BATEAU ET SYSTEME ENERGETIQUE CORRESPONDANT

(30) Priorität: 27.12.2005 DE 102005062583
(43) Veröffentlichungstag der Anmeldung: 10.09.2008
(73) Patentinhaber: SIEMENS AKTIENGESELLSCHAFT, 80333 München (DE)
(72) Erfinder: TIGGES, Kay, 21698 Harsefeld (DE); LÜTZEN, Christian, DK-2750 Ballerup (DK)
(86) Internationale Anmeldenummer: PCT/EP2006/068336
(87) Internationale Veröffentlichungsnummer: WO 2007/073980

(56) Entgegenhaltungen:
- EP-A2- 0 217 049
- WO-A-02/00499
- WO-A-02/47974
- WO-A-02/072418
- CH-A- 144 662
- DE-A1- 4 432 483

## Beschreibung

Die Erfindung betrifft ein Verfahren zum Betrieb eines Energiesystems eines Schiffes, insbesondere eines großen Cargoschiffes, gemäß Oberbegriff des Patentanspruchs 1 und ein dafür geeignetes Energiesystem gemäß Oberbegriff des Patentanspruchs 10, ein derartiges Energiesystem ist z.B. durch die WO-A-0 247 974 bekannt.

Energiesysteme in Schiffen dienen der Erzeugung, Umwandlung und Übertragung von Energie zum Antrieb des Schiffes und dessen elektrischer Verbraucher. Das Energiesystem für große Cargoschiffe, beispielsweise Containerschiffe, umfasst üblicherweise eine Hauptmaschine in Form eines langsam laufenden Zweitakt-Dieselmotor zur Erzeugung von mechanischer Energie zum Antrieb einer Wellenanlage, z.B. einer Propellerwelle, die mit einem Schiffspropeller gekoppelt ist. Die Antriebsleistung derartiger Motoren beginnt bei ca. 10 MW und endet zur Zeit bei ca. 100 MW.

Zusätzlich umfasst das Energiesystem eine Stromgeneratoranlage zur Erzeugung elektrischer Energie für ein elektrisches Netz des Schiffes und mehrere schneller als die Hauptmaschine laufende Hilfsmaschinen, vorzugsweise in Form mittel- bis schnelllaufender Viertakt-Dieselmotoren, mit einer Leistung von ca. 2 - 4 MW zum Antrieb der Stromgeneratoranlage. Üblicherweise treibt jede der Hilfsmaschinen jeweils einen Stromgenerator der Stromgeneratoranlage an. Aus dem elektrischen Netz werden elektrische Verbraucher wie z.B. Hilfsantriebe, die wiederum elektrische Energie in mechanische Energie umsetzen, elektrische Geräte zur Erzeugung von Wärme, Kälte und Licht, sowie elektrische Geräte der Nautik, Kommunikation und zur Steuerung des Schiffes mit elektrischer Energie versorgt.

Ein aus der WO-A-0 247 974 bekanntes Energiesystem für ein Schiff weist darüber hinaus einen elektrischen Motor/Generator auf, der aus dem elektrischen Netz Leistung entnimmt und an die Antriebswelle weitergibt oder der überschüssige Antriebsleistung der Hauptmaschine an das Bordnetz abgibt. Durch den elektrischen Motor/Generator kann somit durch Umwandlung zumindest eines Teil der von der Stromgeneratoranlage in das elektrische Netz eingespeisten elektrischen Energie in mechanische Energie zum Antrieb der Wellenanlage oder durch Umwandlung zumindest eines Teils der von der Hauptmaschine an die Wellenanlage abgegebenen mechanischen Energie in elektrische Energie zur Einspeisung in das elektrische Netz ein Energiefluss zwischen dem elektrischen Netz und der Wellenanlage und somit von der Hauptmaschine zu dem elektrische Netz bzw. von dem elektrischen Netz zu dem Schiffspropeller erzeugt werden. Hierdurch kann die auf dem Schiff in Form von Dieselmotoren installierte Gesamtleistung besser genutzt werden.

In Zeiten zunehmenden Wettbewerbsdruckes sind Betreiber von Cargo-Schiffen bemüht, die Anschaffungs- und Betriebskosten für ihre Schiffe möglichst gering zu halten. Einen wesentlichen Teil der Anschaffungskosten bilden hierbei die Kosten für die installierte Maschinenleistung an Bord des Schiffes und bei den Betriebskosten die Treibstoff- und Wartungskosten. Die Betriebskosten werden durch eine Reihe von Betriebsparametern bestimmt, die vom jeweiligen Betriebspunkt der installierten Maschinen abhängen. Ein wesentlicher Betriebsparameter ist der Treibstoffverbrauch. Durch einen geringeren Treibstoffverbrauch kann bei gleicher Treibstoffmenge die Fahrtstrecke vergrößert oder bei gleich bleibender Fahrtstrecke die benötigte Treibstoffmenge und somit auch der Platzbedarf für Tanks und Gewicht verringert werden. Durch eine Optimierung von Laufzeiten der Maschinen können Wartungskosten eingespart werden. Außerdem müssen beim Betrieb des Schiffes, z.B. im Hafenbereich, Abgasemissionsvorschriften eingehalten oder möglichst geringe Geräusche erzeugt werden. Das Energiesystem unterliegt somit unterschiedlichsten Anforderungen, auf die flexibel unter unterschiedlichsten Rahmenbedingungen reagiert werden muss.

Ausgehend hiervon ist es Aufgabe vor liegender Erfindung, ein Verfahren zum Betrieb eines eingangs erwähnten Energiesystems anzugeben, mit dem bei möglichst geringer installierter Maschinenleistung der Betrieb des Energiesystems flexibel hinsichtlich unterschiedlichster Anforderungen optimiert werden kann. Ferner soll ein für die Durchführung des Verfahrens geeignetes Energiesystem angegeben werden.

Die Lösung dieser Aufgabe gelingt durch ein Verfahren gemäß Patentanspruch 1. Vorteilhafte Ausgestaltungen des Verfahrens sind jeweils Gegenstand der Ansprüche 2 bis 9. Ein für die Durchführung des Verfahrens geeignetes Energiesystem ist Gegenstand des Patentanspruchs 10. Vorteilhafte Ausgestaltungen des Energiesystems sind jeweils Gegenstand der Ansprüche 11 bis 14.

Das erfindungsgemäße Verfahren sieht vor, dass durch Steuerung der Richtung und Größe des Energieflusses zwischen dem elektrischen Netz und der Wellenanlage zum einen die für den Antrieb des Schiffspropellers und für das elektrische Netz benötigte Energie bereitgestellt wird, zum anderen dabei aber das Gesamtsystem bestehend aus der Hauptmaschine und der mindestens einen Hilfsmaschine in einem vorgebbaren Betriebspunkt betrieben wird.

Die Erfindung geht hierbei von der Erkenntnis aus, dass in den meisten Betriebsfällen entweder die Leistung der Hauptmaschine oder die Leistung der mindestens einen Hilfsmaschine nur teilweise ausgenutzt wird. Durch einen Energiefluss von dem elektrischen Netz zu der Wellenanlage können bestehende Leistungsreserven auf Seite der Hilfsmaschinen zum Antrieb des Schiffspropellers genutzt und somit die Hilfsmaschinen zusätzlich belastet und die Hauptmaschine entlastet werden. Umgekehrt kann durch einen Energiefluss von der Wellenanlage zu dem elektrischen Netz die Hauptmaschine zusätzlich belastet und gleichzeitig die Hilfsmaschinen entlastet werden.

Durch die Steuerung der Richtung und Größe des Energieflusses können Leistungsreserven flexibel gehandhabt und insgesamt besser in dem Energiesystem genutzt werden und somit die für eine gewünschte Schiffsgeschwindigkeit für den Antrieb des Schiffspropellers sowie für die elektrischen Verbraucher benötigte Energie bereitgestellt werden. Insbesondere können aber auch unnötige Leistungsreserven bei den Energieerzeugern vermieden und damit die Anschaffungskosten für die installierte Maschinenleistung reduziert werden. So ist es möglich, die Hauptmaschine mit einem oder zwei Zylindern weniger auszuführen, was die Kosten für die Hauptmaschine und deren Platzbedarf senkt.

Mit der mit dem Energiefluss verbundenen zusätzlichen Belastung oder Entlastung der einzelnen Energieerzeuger sind jedoch auch Änderungen derer Betriebspunkte und somit derer Betriebsparameter wie z.B. Treibstoffverbrauch, Emissionen oder Laufzeiten verbunden. Durch Steuerung der Richtung und Größe des Energieflusses können somit diese Betriebsparameter gezielt geändert und hierdurch ein vorgebbarer Betriebspunkt für das Gesamtsystem eingestellt werden.

Der vorgebbare Betriebspunkt kann durch einen oder mehrere Betriebsparameter charakterisiert werden. Bevorzugt umfassen die Betriebsparameter den Treibstoffbedarf, die Abgasemissionen und/oder die Laufzeiten der Hilfsmaschinen des Gesamtsystems aus Hauptmaschine und mindestens einer Hilfsmaschine. In dem vorgebbaren Betriebspunkt können dann der Treibstoffbedarf oder die Abgasemissionen oder die Laufzeit der mindestens einen Hilfsmaschine für das bzw. in dem Gesamtsystem aus Hauptmaschine und mindestens einer Hilfsmaschine minimal sein.

Bevorzugt sind mehreren Betriebsparametern jeweils unterschiedliche Prioritäten zugeordnet, und in dem vorgebbaren Betriebspunkt sind die Betriebsparameter in der Reihenfolge ihrer Priorität optimiert. Beispielsweise gilt erste Priorität für eine möglichst niedrige Abgasemission des Gesamtsystems, zweite Priorität einem möglichst niedrigen Treibstoffverbrauch des Gesamtsystems und dritte Priorität für möglichst geringe Laufzeiten der Hilfsmaschinen in dem Gesamtsystem.

Die Einrichtung zur Herstellung des Energieflusses zwischen dem elektrischen Netz und der Wellenanlage umfasst bevorzugt eine mechanisch mit der Wellenanlage gekoppelte und elektrisch über einen Umrichter mit dem Bordnetz verbundene elektrische Motor-/Generatoreinheit. Unter einer Motor-/Generatoreinheit wird hierbei eine elektrische Maschine verstanden, die sowohl motorisch als auch generatorisch betrieben werden kann. Der Umrichter dient hierbei der Steuerung der Richtung und Größe des Energieflusses von bzw. zu der Motor-/Generatoreinheit und die Motor-/Generatoreinheit zur Umwandlung dieser elektrischen Energie in mechanischer Energie bzw. umgekehrt.

Ein erfindungsgemäßes Energiesystem umfasst
- mindestens eine Hauptmaschine zur Erzeugung von mechanischer Energie zum Antrieb einer Wellenanlage, die mit einem Schiffspropeller gekuppelt ist,
- eine Stromgeneratoranlage zur Erzeugung elektrischer Energie für ein elektrisches Netz des Schiffes,
- mindestens eine schneller als die Hauptmaschine laufende Hilfsmaschine zur Erzeugung mechanischer Energie zum Antrieb der Stromgeneratoranlage,
- eine Einrichtung zur Herstellung eines Energieflusses zwischen dem elektrischen Netz und der Wellenanlage durch Umwandlung zumindest eines Teils der von der Stromgeneratoranlage in das elektrische Netz eingespeisten elektrischen Energie in mechanische Energie zum Antrieb der Wellenanlage oder Umwandlung zumindest eines Teils der von der Hauptmaschine an die Wellenanlage abgegebenen mechanischen Energie in elektrische Energie zur Einspeisung in das elektrische Netz, und
- eine Steuereinrichtung zur Steuerung der Richtung und Größe des Energieflusses durch die Einrichtung zur Herstellung eines Energieflusses zwischen dem elektrischen Netz und der Wellenanlage derart, dass die für den Antrieb des Schiffspropellers und für die Versorgung des elektrischen Netzes benötigte Energie bereitstellbar ist und dabei das Gesamtsystem bestehend aus der Hauptmaschine und der mindestens einen Hilfsmaschine in einem vorgebbaren Betriebspunkt betreibbar ist.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigt:
- FIG 1: ein erfindungsgemäßes Energiesystem für ein Containerschiff,
- FIG 2: ein Diagramm, in dem der Leistungsbedarf P des elektrischen Netzes von FIG 1 in Abhängigkeit von der Zeit dargestellt ist,
- FIG 3: einen Verfahrensablauf zur Einstellung eines vorgebbaren optimalen Betriebspunktes,
- FIG 4-6: Beispiele für Diagramme, die den Treibstoffbedarf und Abgasemissionen von Dieselmotoren in Abhängigkeit von der erzeugten Leistung zeigen,
- FIG 7: das Energiesystem von FIG 1 mit einem Stromgenerator eines Abwärmerückgewinnungssystems und einem einzigen Wellenmotor/-generator,
- FIG 8: das Energiesystem von FIG 1 mit einem Stromgenerator eines Abwärmerückgewinnungssystems und zwei Wellenmotoren/-generatoren.

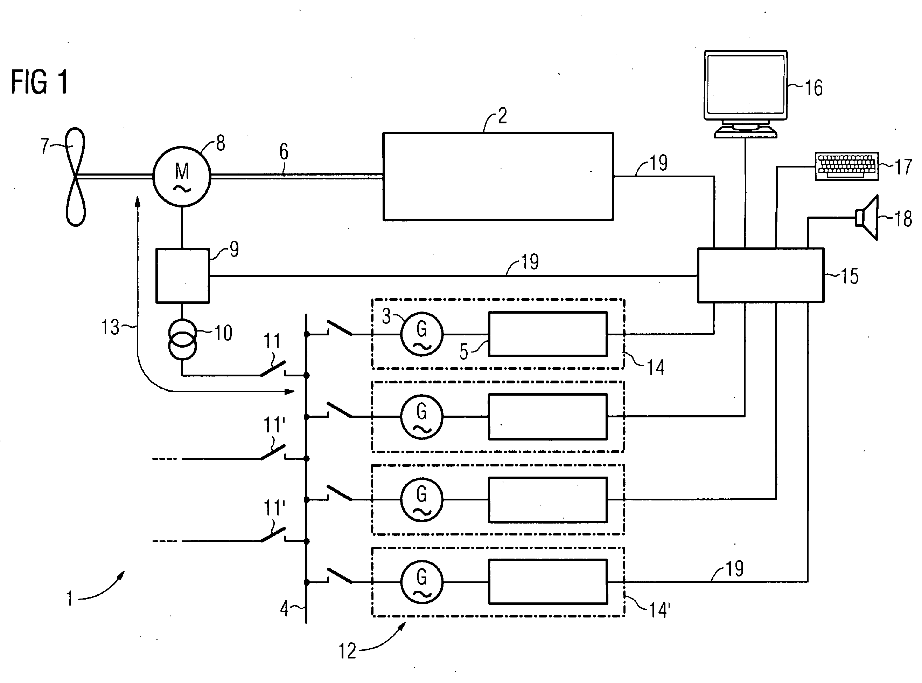

Figur 1 zeigt in stark vereinfachter Form ein erfindungsgemäßes Energiesystem 1 umfassend einen langsam laufenden Zweitakt-Dieselmotor 2 als Hauptmaschine, eine Stromgeneratoranlage 12 umfassend mehrere Generatoren 3, die elektrische Energie in ein elektrisches Netz 4 einspeisen, und vier als mittel bis schnell laufende Viertakt-Dieselmotoren 5 ausgebildete Hilfsmaschinen, von denen jede je einen Generator 3 der Stromgeneratoranlage 12 antreibt. Üblicherweise bilden jeweils ein Generator 3 und ein Dieselmotor 5 ein Dieselgeneratoraggregat 13 bzw. 13'. Das Dieselgeneratoraggregat 13' ist hierbei als Reserve bei Ausfall eines der Dieselgeneratoraggregate 13 vorgesehen. Der Dieselmotor 2 treibt über eine Propellerwelle 6 einen Schiffspropeller 7 zum Antrieb des Schiffes an und hat üblicherweise eine Nennleistung von über 10 MW. Bei Einzelmotoren für Cargoschiffe endet der Leistungsbereich bei ca. 100 MW. Die Dieselmotoren 5 haben üblicherweise eine Leistung von bis zu 5 MW.

Ein als eine Einheit ausgebildeter elektrischer Wellenmotor/- generator 8 ist mechanisch mit der Propellerwelle 6 gekoppelt und elektrisch über einen Umrichter 9, ggf. einen Trafo 10, und einen Schalter 11 mit dem elektrischen Netz 4 verbunden. Der Wellenmotor/-generator 8 ist bevorzugt als langsam laufende Synchronmaschine ausgebildet und wirkt vorzugsweise direkt ohne zwischengeschaltetes Getriebe auf die Propellerwelle 6. Der Wellenmotor/-generator 8 kann aber auch über ein Getriebe an der Propellerwelle 6 angekuppelt oder mit der Kurbelwelle der Hauptmaschine gekuppelt sein, und zwar an dem Ende, das von der Propellerwelle abliegt. Im Fall einer Synchronmaschine wird dem Wellenmotor/-generator 8 über den Umrichter 9 Feldenergie und über einen zweiten, nicht näher dargestellten Umrichter, der ebenfalls mit dem elektrischen Netz 4 verbunden ist, Erregerenergie zugeführt. Der Umrichter 9 kann je nach Art des Wellenmotors/-generators 8 und des elektrischen Netzes z.B. als Stromzwischenkreis- oder Spannungszwischenkreisumrichter ausgebildet sein. Hierfür sind dem Fachmann verschiedenste Umrichtertechnologien bekannt. Mit Hilfe des Wellenmotors-/generators 8 und des Umrichters 9 ist ein Energiefluss 13 zwischen dem elektrischen Netz 4 und der Propellerwelle 6 herstellbar. Bevorzugt beträgt die Nennleistung des Wellenmotors/-generators 8 wenigstens 5 % der Nennleistung des Dieselmotors 2.

Aus dem elektrischen Netz 4 werden über Schalter 11' elektrische Verbraucher wie z.B. Hilfsantriebe, die wiederum elektrische Energie in mechanische Energie umsetzen, elektrische Geräte zur Erzeugung von Wärme, Kälte und Licht, elektrische Geräte der Nautik, Kommunikation und zur Steuerung des Schiffes mit elektrischer Energie versorgt.

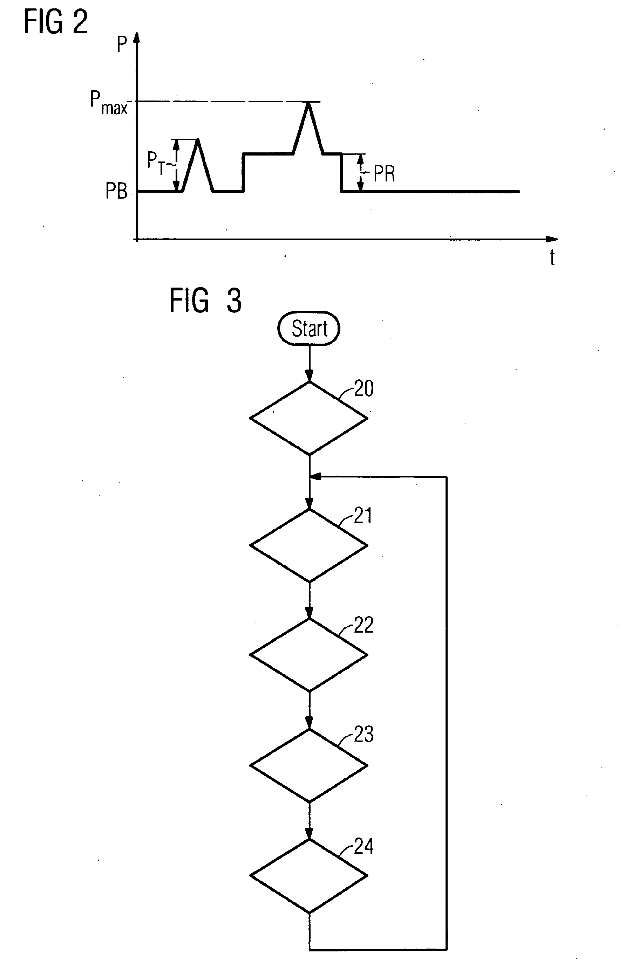

Üblicherweise sind bei einem Containerschiff die Dieselgeneratoraggregate 13 auf die maximal von dem elektrischen Netz 4 benötigte Leistung ausgelegt. Der tatsächliche Leistungsbedarf P ist in Abhängigkeit von der Zeit t vereinfacht in Figur 2 dargestellt. Während der meisten Zeit einer Fahrt des Schiffes wird nur eine Grundlast PB z.B. für Beleuchtung, Nautik-, Kommunikations- und Steuerungssysteme des Schiffes benötigt. Zusätzlich wird im Hafenbereich eine zusätzliche Leistung PT für Querstrahlruder benötigt. In der ersten Zeit nach der Beladung des Schiffes wird für das Herunterkühlen von Kühlcontainern eine zusätzliche Kühlleistung PR benötigt. Die Dieselgeneratoraggregate 13 sind somit auf eine maximale Leistung Pmax = PG + PR + PT ausgelegt. Diese maximale elektrische Leistung wird jedoch außerhalb des Hafenbereiches und somit während der meisten Betriebszeit des Schiffes gar nicht benötigte. Die nicht benötigten Leistungsreserven können deshalb zum Antrieb der Propellerwelle 6 genutzt werden und bei gleich bleibender maximaler Antriebsleistung des Schiffes der Dieselmotor 2 mit geringerer Leistung ausgelegt werden oder bei gleich bleibender Antriebsleistung des Dieselmotors 2 die Gesamtantriebsleistung des Schiffes und somit dessen Fahrgeschwindigkeit vergrößert werden. Der Wellenmotor/-generator 8 wird hierzu im Motorbetrieb betrieben und dazu über den Umrichter 9 aus dem Netz 4 mit elektrischer Energie versorgt. Der Energiefluss 13 ist somit von dem elektrischen Netz 4 zu der Propellerwelle 6 gerichtet.

Umgekehrt können mit Hilfe des Wellenmotors/-generators 8 auch Leistungsreserven des Dieselmotors 2 zur zusätzlichen Versorgung des Netzes 4 mit elektrischer Energie genutzt werden. Bei Betrieb des Wellenmotors/-generators 8 im Generatorbetrieb wird ein Teil der von dem Dieselmotor 2 an die Propellerwelle 6 abgegebenen mechanischen Energie in elektrische Energie umgewandelt und über den Umrichter 9 in das Netz 4 eingespeist. Der Energiefluss 13 ist dann von der Propellerwelle 6 zu dem elektrischen Netz 4 gerichtet.

Das Energiesystem 1 umfasst ferner eine Betriebsoptimierungseinrichtung 15 zur Optimierung des Betriebes des Energiesystems 1. Die Betriebsoptimierungseinrichtung 15 steuert die Richtung und Größe des Energieflusses 13 derart, dass die Propellerwelle 6 mit der für den Antrieb des Schiffspropellers benötigten Antriebsleistung angetrieben, das elektrische Netz 4 mit der benötigten elektrischen Energie versorgt und zum anderen das Gesamtsystem der Energieerzeuger bestehend aus dem langsam laufenden Dieselmotor 2 und den schnelllaufenden Dieselmotoren 5 in einem vorgebbaren Betriebspunkt betrieben wird.

Beim Betrieb des Schiffes werden (siehe Figur 3) in einem ersten Schritt 20 von der Betriebsoptimierungseinrichtung 15 vom Schiffspersonal die zu optimierenden Betriebsparameter abgefragt. Dies kann beispielsweise mit Hilfe eines auf einer Ausgabeeinheit 16, z.B. eines Displays, angezeigten Auswahlmenüs erfolgen. Das Schiffspersonal kann anschließend über eine Eingabeeinheit 17, z.B. eine Tastatur, einen oder mehrere der angezeigten Betriebsparameter auswählen und den ausgewählten Betriebsparametern Prioritäten zuordnen. Alternativ können die zu optimierenden Betriebsparameter auch bereits fest in der Betriebsoptimierungseinrichtung 15 abgespeichert sein.

Anschließend erfasst die Betriebsoptimierungseinrichtung in einem Schritt 21 den aktuellen Energiebedarfs für den Antrieb des Schiffspropellers 7 und für das elektrische Netz 4. Die hierfür benötigten Daten können beispielsweise von der Schiffsleitebene, Maschinentelegraph, Bordnetzsteuerung etc. erhalten werden.

Anschließend werden in einem Schritt 22 die aktuellen Betriebspunkte des langsam laufenden Dieselmotor 2 und der schnelllaufenden Dieselmotoren 5 hinsichtlich der zu optimierenden Betriebsparameter und daraus der aktuelle Betriebspunkt des Gesamtsystems aus langsam laufenden Dieselmotor 2 und schnelllaufenden Dieselmotoren 5 hinsichtlich der zu optimierenden Betriebsparameter ermittelt. Die Bestimmung der Betriebspunkte bzw. der zu optimierenden Betriebsparameter erfolgt entweder direkt durch Messung der Betriebsparameter der Dieselmotoren 2 und 5, z.B. deren Treibstoffverbrauch, oder indirekt durch Ableitung dieser Betriebsparameter aus anderen gemessenen Betriebsparametern.

Daraufhin wird in einem Schritt 23 von der Betriebsoptimierungseinrichtung ein optimaler Betriebspunkt zur Deckung des aktuellen Energiebedarfs für das Gesamtsystem bei gleichzeitiger Optimierung der Betriebsparameter für das Gesamtsystem in der Reihenfolge ihrer Priorität ermittelt. Hierzu sind in der Betriebsoptimierungseinrichtung 15 für jeden der Dieselmotoren 2, 5 Daten abgespeichert, die den Zusammenhang der Energieabgabe der Dieselmotoren mit ihren jeweiligen Betriebsparametern, z.B. dem jeweiligen Treibstoffverbrauch, Emission oder Laufzeit angeben.

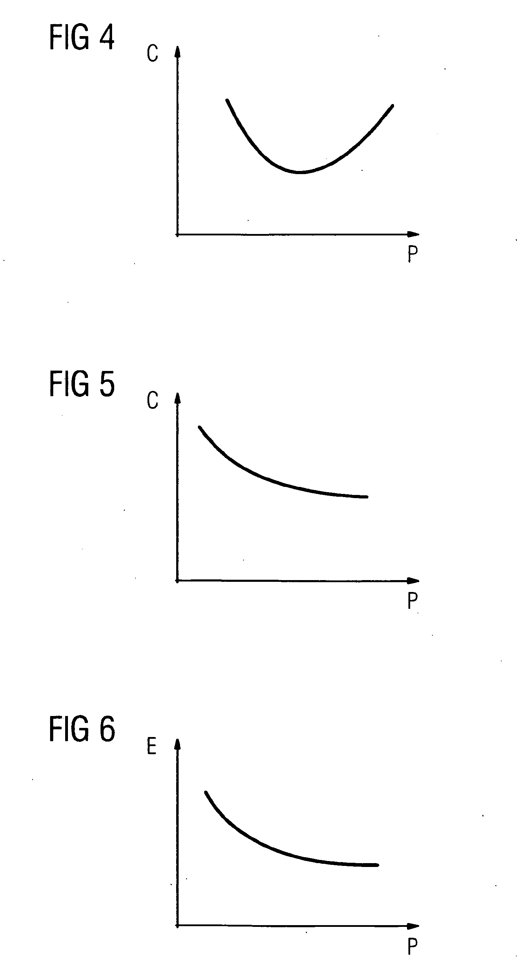

Figur 4 zeigt hierzu beispielhaft den Treibstoffverbrauch C in Abhängigkeit von der abgegebenen Leistung P für einen Zweitakt-Dieselmotor 2, Figur 5 für einen Viertakt-Dieselmotor 5 und Figur 6 zeigt die Abgasemissionen E eines Zweitakt-Dieselmotors 2 in Abhängigkeit von der abgegebenen Leistung P.

Bestehen hinsichtlich der zu optimierenden Betriebsparameter Abweichungen zwischen dem optimalen und dem aktuellen Betriebspunkt des Gesamtsystems können diese dem Schiffspersonal in einem Schritt 24 auf der Ausgabeeinheit 16 angezeigt und somit das Schiffspersonal, z.B. durch Ausgabe von Handlungsempfehlungen, zur Einstellung der optimalen Richtung und Größe des Energieflusses von dem elektrischen Netz 4 zu der Propellerwelle 6 oder umgekehrt und somit zur Heranführung des Betriebspunktes des Gesamtsystems an den optimalen Betriebspunkt veranlasst werden. Wenn ein bestimmter Grenzwert für die Abweichungen überschritten wird, kann von der Betriebsoptimierungseinrichtung 15 über einen Lautsprecher 18 auch ein akustisches Warnsignal ausgelöst werden.

Alternativ kann die Betriebsoptimierungseinrichtung in dem Schritt 24 auch selbständig und automatisiert durch entsprechende Steuerung des Energieflusses 13 zwischen der Propellerwelle 6 und dem elektrischen Netz 4 den Betriebspunkt des Gesamtsystems an den gewünschten optimalen Betriebspunkt heranführen. Die Betriebsoptimierungseinrichtung 15 ist hierzu über Steuerleitung 19 zum einen mit dem Umrichter 9 und zum anderen mit nicht näher dargestellten Steuereinrichtungen der Energieerzeuger, d.h. der Dieselmotoren 2 und 5, verbunden und steuert hierüber die Leistungsabgaben und somit Betriebspunkte des Dieselmotors 2 und der Dieselmotoren 5, den Stromfluss durch den Umrichter 9 und somit den Energiefluss über den Wellenmotor/-generator 8 derart, dass die zu optimierenden Betriebsparameter in der Reihenfolge ihrer Priorität optimiert sind.

Von der Betriebsoptimierungseinrichtung 15 wird nun - wie in Figur 3 durch einen Rücksprung von Schritt 24 auf Schritt 21 angedeutet - laufend der aktuelle Energiebedarf ermittelt, bei Änderungen des Energiebedarfs der optimale Betriebspunkt ermittelt und anschließend Abweichungen des aktuellen Betriebspunktes dem Schiffspersonal anzeigt oder selbständig durch entsprechende Steuerung des Energieflusses 13 ein optimaler Betriebspunkt für das Gesamtsystem eingestellt. Mit Hilfe einer selbstlernenden Struktur in der Betriebsoptimierungseinrichtung 15 können noch weitere Optimierungen erfolgen.

Die Flexibilität in der Ausnutzung der an Bord installierten Leistung und in der Einstellung eines optimalen Betriebspunktes kann noch dadurch verbessert werden, dass die Stromgeneratoranlage zusätzlich mindestens einen Stromgenerator eines Abwärmerückgewinnungssystems zur Erzeugung elektrischer Energie aus Abwärme der Hauptmaschine 2 umfasst.

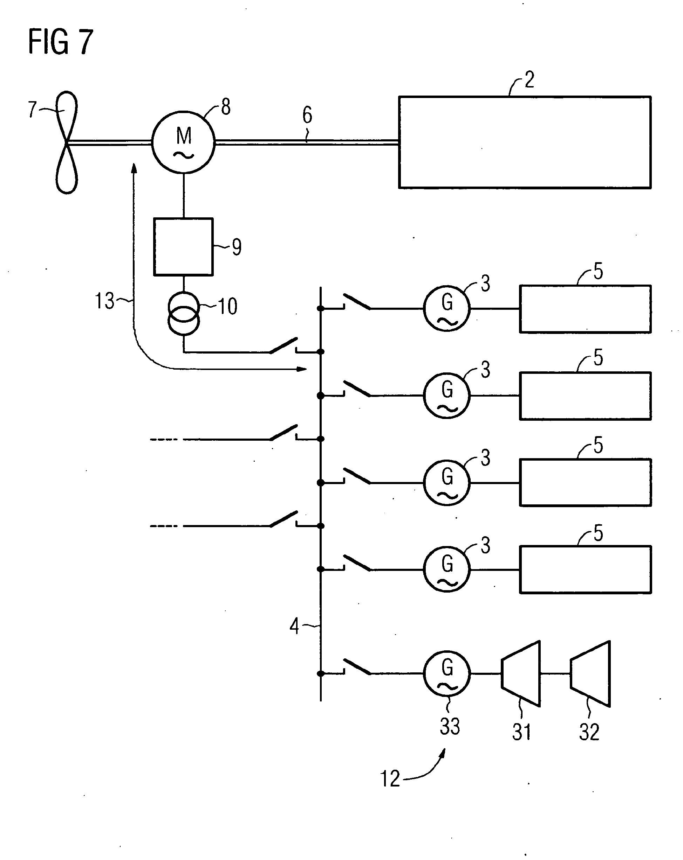

Figur 7 zeigt hierzu das in Figur 1 gezeigte Energiesystem 1, welches zusätzlich einen von Turbine 31, 32 eines nicht näher dargestellten Abwärmerückgewinnungssystem des Dieselmotors 2 angetrieben Stromgenerator 33 aufweist, dessen erzeugte elektrische Energie in das elektrische Netz 4 einspeisbar und über das elektrische Netz 4, den Umrichter 9 und den Wellenmotor/-generator 8 auch als mechanische Energie der Propellerwelle 6 zuführbar ist. Unter einer Annahme einer Leistung des Stromgenerators 33 von 5MW, einer von den Dieselmotoren 5 auf See zur Verfügung stehenden Leistung von 5 MW und einer Leistung des Wellenmotors/-generators 8 von 10 MW kann nun die Antriebsleistung des Dieselmotors 3 um 10 MW verkleinert und somit beispielsweise der Dieselmotor 2 statt mit 11 nur noch mit 9 Zylindern ausgeführt werden. Durch Steuerung des Energieflusses 13 zwischen dem elektrischen Netz 4 und der Propellerwelle 6 kann die installiert Leistung optimal genutzt und außerdem des Gesamtsystem in einem vorgegebenen optimalen Betriebspunkt betrieben werden.

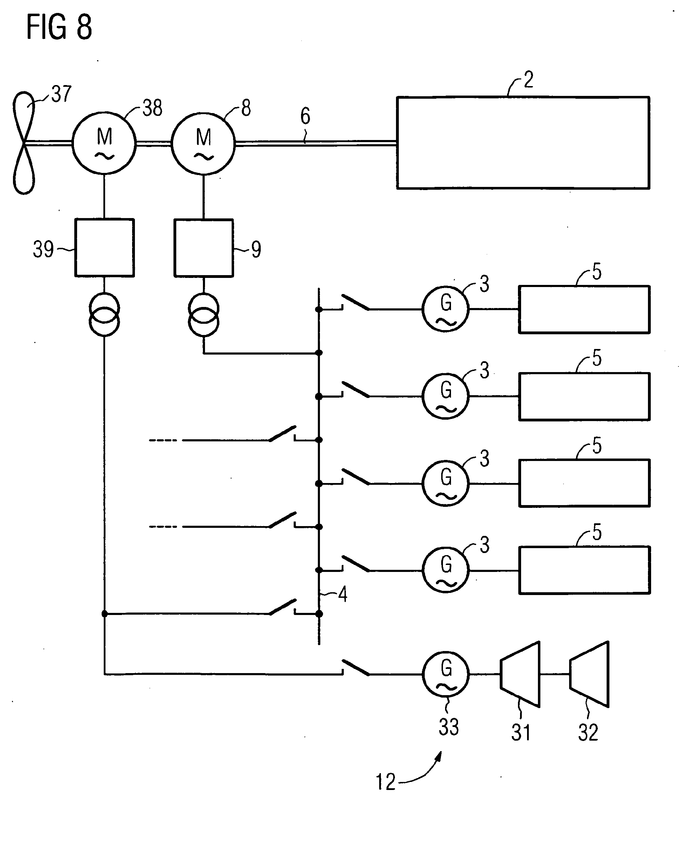

Das in Figur 8 gezeigten Energiesystem 31 unterscheidet sich von dem in Figur 7 gezeigten Energiesystem dadurch, dass es noch einen zweiten Wellengenerator-/motor 38 umfasst, der mechanisch mit der Propellerwelle 6 gekoppelt und elektrisch über einen Umrichter 39 mit dem elektrischen Netz 4 verbunden ist. Statt eines wellenmotors/-generators hoher Leistung von z.B. 10 MW können nun zwei Wellenmotoren/-generatoren 8, 38 mit der Hälfte der Leistung, d.h. z.B. jeweils 5 MW, vorgesehen und dabei die gleichen Vorteile wie bei dem in Figur 5 gezeigten Energiesystem erzielt werden.

Eine weitere Erhöhung der Flexibilität in der Einstellung des optimalen Betriebspunktes ist dadurch möglich, dass der Schiffspropeller 7 Propellerblätter aufweist, die in ihrer Steigung mittels eines Verstellantriebs verstellbar sind. Neben der Erhöhung der Flexibilität in der Einstellung des optimalen Betriebspunktes kann bei gleich bleibender Gesamtantriebsleistung die für den Dieselmotor 2 benötigte Leistung noch weiter veringert und im Fall des Ausführungsbeispieles der Figuren 7 und 8 der Dieselmotor 2 statt mit 9 nur noch mit 8 Zylindern ausgeführt werden.

## Patentansprüche

1. Verfahren zum Betrieb eines Energiesystems (1) eines Schiffes, insbesondere eines großen Cargoschiffes, umfassend
- mindestens eine Hauptmaschine (2) zur Erzeugung von mechanischer Energie zum Antrieb einer Wellenanlage (6), die mit einem Schiffspropeller (7) gekuppelt ist;
- eine Stromgeneratoranlage (12) zur Erzeugung elektrischer Energie für ein elektrisches Netz (4) des Schiffes,
- mindestens eine schneller als die Hauptmaschine (2) laufende Hilfsmaschine (5) zur Erzeugung mechanischer Energie zum Antrieb der Stromgeneratoranlage (12),
- eine Einrichtung (8) zur Herstellung eines Energieflusses (13) zwischen dem elektrischen Netz (4) und der Wellenanlage (6) durch Umwandlung zumindest eines Teils der von der Stromgeneratoranlage (12) in das elektrische Netz (4) eingespeisten elektrischen Energie in mechanische Energie zum Antrieb der Wellenanlage (6) bzw. Umwandlung zumindest eines Teils der von der Hauptmaschine (2) an die Wellenanlage (6) abgegebenen mechanischen Energie in elektrische Energie zur Einspeisung in das elektrische Netz (4),
**dadurch gekennzeichnet, dass** durch Steuerung der Richtung und Größe dieses Energieflusses (13) die für den Antrieb des Schiffspropellers (7) und für das elektrische Netz (4) benötigte Energie bereitgestellt und dabei das Gesamtsystem bestehend aus der Hauptmaschine (2) und der mindestens einen Hilfsmaschine (5) in einem vorgebbaren Betriebspunkt betrieben wird, wobei durch einen Energiefluss von dem elektrischen Netz zu der Wellenanlage die Hilfsmaschine(n) zusätzlich belastet und die Hauptmaschine entlastet und durch einen Energiefluss von der Wellenanlage zu dem elektrischen Netz die Hauptmaschine zusätzlich belastet und gleichzeitig die Hilfsmaschine(n) entlastet werden.

2. Verfahren nach Anspruch 1,
**dadurch gekennzeichnet, dass** der vorgebbare Betriebspunkt durch einen oder mehrere Betriebsparameter (C, E) charakterisiert wird .

3. Verfahren nach Anspruch 2,
**dadurch gekennzeichnet, dass** die Betriebsparameter den Treibstoffbedarf (C), die Emissionen (E) und/oder die Laufzeiten der Hilfsmaschinen (5) des Gesamtsystems aus Hauptmaschine (2) und mindestens einer Hilfsmaschine (5) umfassen.

4. Verfahren nach Aspruch 1,
**dadurch gekennzeichnet, dass** in dem vorgebbaren Betriebspunkt der Treibstoffbedarf (C) oder die Abgasemissionen (E) oder die Laufzeit der mindestens einen Hilfsmaschine für das bzw. in dem Gesamtsystem aus Hauptmaschine (2) und mindestens einer Hilfsmaschine (5) minimal sind.

5. Verfahren nach Anspruch 2,
**dadurch gekennzeichnet, dass** mehreren Betriebsparametern (C, E) jeweils unterschiedliche Prioritäten zugeordnet sind, und dass in dem vorgebbaren Betriebspunkt die Betriebsparameter in der Reihenfolge ihrer Priorität optimiert sind.

6. Verfahren nach Anspruch 1,
**dadurch gekennzeichnet, dass** die Einrichtung zur Herstellung des Energieflusses (13) zwischen dem elektrischen Netz (4) und der Wellenanlage (6) eine mechanisch mit der Wellenanlage (6) gekoppelte und elektrisch über einen Umrichter (9) mit dem elektrischen Netz (4) verbundene elektrische Motor-/Generatoreinheit (8) umfasst.

7. Verfahren nach einem der vorhergehenden Ansprüche, **dadurch gekennzeichnet, dass** während des Betriebes Abweichungen eines aktuellen Betriebspunktes zu dem vorgebbaren Betriebspunkt ermittelt werden.

8. Verfahren nach Anspruch 7,
**dadurch gekennzeichnet, dass** die Abweichungen dem Schiffspersonal zur Einleitung von Maßnahmen zur Heranführung des aktuelle Betriebspunkt an den vorgebbaren Betriebspunkt angezeigt werden.

9. Verfahren nach Anspruch 7,
**dadurch gekennzeichnet, dass** bei Abweichungen durch Steuerung der Richtung und Größe des Energieflusses (13) zwischen dem elektrischen Netz (4) und Wellenanlage (6) automatisch der aktuelle Betriebspunkt an den vorgebbaren Betriebspunkt herangeführt wird.

10. Energiesystem (1) für ein Schiff, insbesondere zur Durchführung des Verfahrens nach einem der vorhergehenden Ansprüche, umfassend
- mindestens eine Hauptmaschine (2) zur Erzeugung von mechanischer Energie zum Antrieb einer Wellenanlage (6), die mit einem Schiffspropeller (7) gekuppelt ist,
- eine Stromgeneratoranlage (12) zur Erzeugung elektrischer Energie für ein elektrisches Netz (4) des Schiffes,
- mindestens eine schneller als die Hauptmaschine (2) laufende Hilfsmaschine (5) zur Erzeugung mechanischer Energie zum Antrieb der Stromgeneratoranlage (12),
- eine Einrichtung (8) zur Herstellung eines Energieflusses (13) zwischen dem elektrischen Netz (4) und der Wellenanlage (6) durch Umwandlung zumindest eines Teils der von der Stromgeneratoranlage (12) in das elektrische Netz (4) eingespeisten elektrischen Energie in mechanische Energie zum Antrieb der Wellenanlage (6) oder Umwandlung zumindest eines Teils der von der Hauptmaschine (2) an die Wellenanlage (6) abgegebenen mechanischen Energie in elektrische Energie zur Einspeisung in das elektrische Netz (4),
**gekennzeichnet durch** eine Steuereinrichtung (15) zur Steuerung der Richtung und Größe des Energieflusses (13) **durch** die Einrichtung (8) zur Herstellung eines Energieflusses zwischen dem elektrisches Netz und der Wellenanlage derart, dass die für den Antrieb des Schiffspropellers (7) und für die Versorgung des elektrischen Netzes (4) benötigte Energie bereitstellbar ist und dabei das Gesamtsystem bestehend aus der Hauptmaschine (2) und der mindestens einen Hilfsmaschine (5) in einem vorgebbaren Betriebspunkt betreibbar ist, wobei durch einen Energiefluss von dem elektrischen Netz zu der Wellenanlage die Hilfsmaschine(n) zusätzlich belastet und die Hauptmaschine entlastet und **durch** einen Energiefluss von der Wellenanlage zu dem elektrischen Netz die Hauptmaschine zusätzlich belastet und gleichzeitig die Hilfsmaschine(n) entlastet werden.

11. Energiesystem nach Anspruch 10,
**dadurch gekennzeichnet, dass** die Einrichtung zur Herstellung des Energieflusses (13) zwischen dem elektrischen Netz (4) und der Wellenanlage (6) eine mechanisch mit der Wellenanlage (6) gekoppelte und elektrisch über einen Umrichter (9) mit dem elektrischen Netz (4) verbundene elektrische Motor-/Generatoreinheit (8) umfasst.

12. Energiesystem nach Anspruch 11,
**dadurch gekennzeichnet, dass** die Stromgeneratoranlage (12) mindestens einen Stromgenerator (33) eines Abwärmerückgewinnungssystem zur Erzeugung elektrischer Energie aus Abwärme der Hauptmaschine (2) umfasst.

13. Energiesystem nach Anspruch 12,
**dadurch gekennzeichnet, dass** die Nennleistung der elektrischen Motor-/Generatoreinheit (8) wenigstens 5 % der Nennleistung der Hauptmaschine (2) beträgt.

14. Energiesystem nach Anspruch 13,
**dadurch gekennzeichnet, dass** der Schiffspropeller (7) Propellerblätter aufweist, die in ihrer Steigung mittels eines Verstellantriebs verstellbar sind.

## Claims

1. Method for operating an energy system (1) of a ship, particularly of a large cargo ship, comprising
- at least one main engine (2) for generating mechanical energy for driving a shaft unit (6) which is coupled to a marine screw propeller (7),
- a power generation system (12) for generating electrical energy for an electrical network (4) of the ship,
- at least one auxiliary engine (5), running faster than the main engine (2), for generating mechanical energy for driving the power generation system (12),
- an installation (8) for establishing an energy flux (13) between the electrical network (4) and the shaft unit (6) by converting at least a part of the electrical energy supplied by the power generation system (12) to the electrical network (4) into mechanical energy for driving the shaft unit (6) or converting at least a part of the mechanical energy delivered from the main engine (2) to the shaft unit (6) into electrical energy to be supplied to the electrical network (4),
**characterized in that** by controlling the direction and amount of this energy flux (13), the energy required for driving the marine screw propeller (7) and for the electrical network (4) is provided and at the same time the total system consisting of the main engine (2) and the at least one auxiliary engine (5) is operated at a predeterminable operating point, wherein the auxiliary engine(s) is (are) additionally loaded, and the main engine relieved, by an energy flux from the electrical network to the shaft unit and the main engine is additionally loaded and, at the same time, the auxiliary engine(s) is (are) relieved by an energy flux from the shaft unit to the electrical network.

2. Method according to Claim 1,
**characterized in that** the predeterminable operating point is **characterized by** one or more operating parameters (C, E).

3. Method according to Claim 2,
**characterized in that** the operating parameters comprise the fuel requirement (C), the emissions (E) and/or the running times of the auxiliary engines (5) of the total system of main engine (2) and at least one auxiliary engine (3).

4. Method according to Claim 1, **characterized in that** at the predeterminable operating point, the fuel requirement (C) or the exhaust emissions (E) or the running time of the at least one auxiliary engine are minimal for the or in the total system of main engine (2) and at least one auxiliary engine (5).

5. Method according to Claim 2, **characterized in that** in each case different priorities are allocated to a number of operating parameters (C, E) and that the operating parameters are optimized in the order of their priority at the predeterminable operating point.

6. Method according to Claim 1, **characterized in that** the installation for establishing the energy flux (13) between the electrical network (4) and the shaft unit (6) comprises an electrical motor/generator unit (8) coupled mechanically to the shaft unit (6) and connected electrically to the electrical network (4) via an inverter (9).

7. Method according to one of the preceding claims, **characterized in that** during the operation, deviations of a current operating point from the predeterminable operating point are determined.

8. Method according to Claim 7, **characterized in that** the deviations are indicated to the ship's personnel for initiating measures for moving the current operating point towards the predeterminable operating point.

9. Method according to Claim 7, **characterized in that** in the case of deviations, the current operating point is automatically moved towards the predeterminable operating point by controlling the direction and amount of energy flux (13) between the electrical network (4) and shaft unit (6).

10. Energy system (1) for a ship, particularly for carrying out the method according to one of the preceding claims, comprising
- at least one main engine (2) for generating mechanical energy for driving a shaft unit (6) which is coupled to a marine screw propeller (7),
- a power generation system (12) for generating electrical energy for an electrical network (4) of the ship,
- at least one auxiliary engine (5), running faster than the main engine (2), for generating mechanical energy for driving the power generation system (12),
- an installation (8) for establishing an energy flux (13) between the electrical network (4) and the shaft unit (6) by converting at least a part of the electrical energy supplied by the power generation system (12) to the electrical network (4) into mechanical energy for driving the shaft unit (6) or converting at least a part of the mechanical energy delivered from the main engine (2) to the shaft unit (6) into electrical energy to be supplied to the electrical network (4),
**characterized by** a control device (15) for controlling the direction and amount of energy flux (13) by means of the installation (8) for establishing an energy flux between the electrical network and the shaft unit, in such a manner that the energy needed for driving the marine screw propeller (7) and for supplying the electrical network (4) can be provided and at the same time the total system consisting of the main engine (2) and the at least one auxiliary engine (5) can be operated at a predeterminable operating point, wherein the auxiliary engine(s) is/are additionally loaded and the main engine is relieved by an energy flux from the electrical network to the shaft unit and the main engine is additionally loaded and, at the same time, the auxiliary engine(s) is (are) relieved by an energy flux from the shaft unit to the electrical network.

11. Energy system according to Claim 10, **characterized in that** the installation for establishing the energy flux (13) between the electrical network (4) and the shaft unit (6) comprises an electrical motor/generator unit (8) which is mechanically coupled to the shaft unit (6) and electrically connected to the electrical network (4) via an inverter (9).

12. Energy system according to Claim 11, **characterized in that** the power generation system (12) comprises at least one power generator (33) of a waste heat recovery system for generating electrical energy from waste heat of the main engine (2).

13. Energy system according to Claim 12, **characterized in that** the rated power of the electrical motor/generator unit (8) is at least 5% of the rated power of the main engine (2).

14. Energy system according to Claim 13, **characterized in that** the marine screw propeller (7) has propeller blades, the pitch of which is adjustable by means of an adjusting drive.

## Revendications

1. Procédé pour faire fonctionner un système ( 1 ) énergétique d'un bateau, notamment d'un gros bateau cargo, comprenant
- au moins une machine ( 2 ) principale pour la production d'énergie mécanique pour entraîner une installation ( 6 ) à arbre, qui est couplée à une hélice ( 7 ) de bateau,
- une installation ( 2 ) de génératrice de courant pour la production d'énergie électrique pour un réseau ( 4 ) électrique du bateau,
- au moins une machine ( 5 ) auxiliaire tournant plus vite que la machine ( 2 ) principale pour la production d'énergie mécanique pour l'entraînement de l'installation ( 12 ) de génératrice de courant,
- un dispositif ( 8 ) de production d'un flux ( 13 ) d'énergie entre le réseau ( 4 ) électrique et l'installation ( 6 ) à arbre par transformation en énergie mécanique d'au moins une partie de l'énergie électrique injectée dans le réseau ( 4 ) électrique par l'installation ( 12 ) de génératrice de courant ou par transformation en énergie électrique pour l'alimentation du réseau ( 4 ) électrique d'au moins une partie de l'énergie mécanique cédée par la machine ( 2 ) principale à l'installation ( 6 ) à arbre,
**caractérisé en ce que**, par une commande du sens et de la grandeur de ce flux ( 13 ) d'énergie, on met à disposition l'énergie nécessaire pour le fonctionnement de l'hélice du bateau et pour le réseau ( 4 ) électrique et on fait fonctionner ainsi tout le système constitué de la machine ( 2 ) principale et de la au moins une machine ( 5 ) auxiliaire en un point de fonctionnement pouvant être prescrit dans lequel, par un flux d'énergie du réseau électrique à l'installation à arbre, on charge supplémentairement la ou les machines auxiliaires et on décharge la machine principale et, par un flux d'énergie de l'installation à arbre au réseau électrique, on charge supplémentairement la machine principale et on décharge en même temps la ou les machines auxiliaires.

2. Procédé suivant la revendication 1,
**caractérisé en ce que** l'on caractérise le point de fonctionnement pouvant être prescrit par un ou par plusieurs paramètres ( C, E ) de fonctionnement.

3. Procédé suivant la revendication 2,
**caractérisé en ce que** les paramètres de fonctionnement comprennent le besoin ( C ) en carburant, les émissions ( E ) et/ou les durées de fonctionnement des machines ( 5 ) auxiliaires de tout le système composé de la machine ( 2 ) principale et d'au moins une machine ( 5 ) auxiliaire.

4. Procédé suivant la revendication 1,
**caractérisé en ce qu'**au point de fonctionnement pouvant être prescrit, le besoin ( C ) de carburant ou les émissions ( E ) de gaz d'échappement ou la durée de fonctionnement de la au moins une machine auxiliaire pour tout le système ou dans tout le système composé de la machine ( 2 ) principale et de la au moins une machine ( 5 ) auxiliaire sont minimum.

5. Procédé suivant la revendication 2,
**caractérisé en ce que** des priorités différentes sont affectées respectivement à plusieurs paramètres ( C, E ) de fonctionnement et **en ce qu'**au point de fonctionnement pouvant être prescrit, les paramètres de fonctionnement sont optimisés dans l'ordre de leur priorité.

6. Procédé suivant la revendication 1,
**caractérisé en ce que** le dispositif de production du flux ( 13 ) d'énergie comprend un groupe ( 8 ) électrique moteur/génératrice couplé mécaniquement à l'installation ( 6 ) d'arbre et relié électriquement au réseau ( 4 ) électrique par un convertisseur ( 9 ) de fréquence.

7. Procédé suivant l'une des revendications précédentes,
**caractérisé en ce que**, pendant le fonctionnement, on détermine des écarts d'un point de fonctionnement instantané au point de fonctionnement pouvant être prescrit.

8. Procédé suivant la revendication 7,
**caractérisé en ce que** l'on indique les écarts au personnel du bateau pour faire prendre des mesures tendant à amener le point de fonctionnement instantané au point de fonctionnement pouvant être prescrit.

9. Procédé suivant la revendication 7,
**caractérisé en ce qu'**en cas d'écart, on amène automatiquement le point de fonctionnement instantané au point de fonctionnement pouvant être prescrit par une commande du sens et de la grandeur du flux ( 13 ) d'énergie entre le réseau ( 4 ) électrique et l'installation ( 6 ) à arbre.

10. Système ( 1 ) énergétique pour un bateau, notamment pour effectuer le procédé suivant l'une des revendications précédentes, comprenant
- au moins une machine ( 2 ) principale pour la production d'énergie mécanique pour entraîner une installation ( 6 ) à arbre, qui est couplée à une hélice ( 7 ) de bateau,
- une installation ( 2 ) de génératrice de courant pour la production d'énergie électrique pour un réseau ( 4 ) électrique du bateau,
- au moins une machine ( 5 ) auxiliaire tournant plus vite que la machine ( 2 ) principale pour la production d'énergie mécanique pour l'entraînement de l'installation ( 12 ) de génératrice de courant,
- un dispositif ( 8 ) de production d'un flux ( 13 ) d'énergie entre le réseau ( 4 ) électrique et l'installation ( 6 ) à arbre par transformation en énergie mécanique d'au moins une partie de l'énergie électrique injectée dans le réseau ( 4 ) électrique par l'installation ( 12 ) de génératrice de courant ou par transformation en énergie électrique pour l'alimentation du réseau ( 4 ) électrique d'au moins une partie de l'énergie mécanique cédée par la machine ( 2 ) principale à l'installation ( 6 ) à arbre,
**caractérisé par** un dispositif ( 15 ) de commande du sens et de la grandeur du flux ( 13 ) d'énergie par le dispositif ( 8 ) de production d'un flux d'énergie entre le réseau électrique et l'installation à arbre, de façon à pouvoir mettre à disposition l'énergie nécessaire pour le fonctionnement de l'hélice ( 7 ) du bateau et pour l'alimentation du réseau ( 4 ) électrique et de façon à pouvoir faire fonctionner ainsi tout le système constitué de la machine ( 1 ) principale et de la au moins une machine ( 5 ) auxiliaire en un point de fonctionnement pouvant être prescrit, dans lequel , par un flux d'énergie du réseau électrique à l'installation à arbre, on charge supplémentairement la ou les machines auxiliaires et on décharge la machine principale et, par un flux d'énergie de l'installation à arbre au réseau électrique, on charge supplémentairement la machine principale et on décharge en même temps la ou les machines auxiliaires.

11. Système énergétique suivant la revendication 10,
**caractérisé en ce que** le dispositif de production du flux ( 13 ) d'énergie comprend un groupe ( 8 ) électrique moteur/génératrice couplé mécaniquement à l'installation ( 6 ) d'arbre et relié électriquement au réseau ( 4 ) électrique par un convertisseur ( 9 ) de fréquence.

12. système énergétique suivant la revendication 11,
**caractérisé en ce que** l'installation ( 12 ) à génératrice de courant comprend au moins une génératrice ( 33 ) de courant d'un système de récupération de la chaleur perdue pour produire de l'énergie électrique à partir de la chaleur perdue de la machine ( 2 ) principale.

13. Système énergétique suivant la revendication 12,
**caractérisé en ce que** la puissance nominale du groupe ( 8 ) électrique moteur/génératrice représente au moins 5 % de la puissance nominale de la machine ( 2 ) principale.

14. Système énergétique suivant la revendication 13,
**caractérisé en ce que** l'hélice ( 7 ) du bateau a des pales d'hélice, dont le pas est réglable au moyen d'un entraînement de réglage.
